# EUROPEAN PATENT SPECIFICATION

(11) **EP 2 092 172 B1**
(45) Date of publication and mention of the grant of the patent: **10.01.2018**
(21) Application number: 07856187.5
(22) Date of filing: 20.11.2007
(51) Int. Cl.: F02B 29/04

(54) **GAS INTAKE DEVICE**
GASANSAUGVORRICHTUNG
DISPOSITIF D'ADMISSION DE GAZ

(30) Priority: 20.11.2006 FR 0655001
(43) Date of publication of application: 26.08.2009
(73) Proprietor: Valeo Systèmes de Contrôle Moteur, 95892 Cergy Pontoise (FR)
(72) Inventor: RIMPAU, Arnold, 38114 Braunschweig (DE); PIETROWSKI, Herbert, 74385 Pleidelsheim (DE); FISCHER, Udo, 38104 Braunschweig (DE); LEROUX, Samuel, 78300 Poissy (FR); LALLEMANT, Mathieu, 75019 Paris (FR)
(74) Representative: Santarelli
(86) International application number: PCT/EP2007/010008
(87) International publication number: WO 2008/061693

(56) References cited:
- EP-A- 1 336 736
- WO-A-2005/001272
- DE-A1- 19 853 455
- DE-A1-102004 049 027
- FR-A1- 2 864 582
- JP-A- 2003 106 228
- US-A1- 2004 173 343

## Description

The present invention relates to a gas intake device, for introducing said gases into the cylinder head of an automotive vehicle thermal engine. By the term "gas" there is meant air or a blend of air and exhaust gas, optionally supplemented with a liquid and/or gaseous fuel.

An automotive vehicle thermal engine comprises a combustion chamber, generally made with a plurality of cylinders, wherein a blend of an oxidizing agent and a fuel is burnt off for producing the engine work. The oxidizing agent comprises air, either pressurized or not, depending on whether the engine comprises a turbocompressor or not. The air could additionally be mixed with exhaust gases; these are referred to as recirculated exhaust gases. The gases fed into the combustion chamber are referred to as feed gases.

Feed gases are received at an "intake manifold", often referred to by the man of the art using the English term "intake manifold". The manifold is connected with the cylinder head of the combustion chamber, i.e. the cylinder inlet. Depending on the engine power, gases could be cooled, either entirely or partially, or not cooled. Two pipes therefore feed the manifold: one directly supplying feed gases into the manifold, the other indirectly supplying the latter via a heat exchanger, allowing for gases to be cooled down passing therein, or in some cases, to be heated.

Prior art heat exchangers are housed in an accommodating housing, generally made of plastics. In addition to its accommodating function, the accommodating housing is often arranged so as to also integrate the inlet housing and/or the outlet housing of the heat exchanger. The accommodating housing furthermore generally supports a number of other elements, i.e. for example, connecting elements, valves, the intake manifold, an exhaust gas intake module, etc. depending on the engine construction. An example of such a housing is disclosed in patent application n° DE 199 02 504.

In addition to such supporting constraints, the accommodating housing is submitted to pressure stresses associated to the circulation of pressurized feed gases 2, 7. The lid of the accommodating housing, more particularly, covers the whole housing and is subjected to all the pressure. Furthermore, such a housing is subjected to vibrations generated by all the elements it supports.

Such a housing should therefore be made more rigid, in order not to swell under the pressure stresses or to avoid being damaged as a result of vibrations. Such a reinforcement is costly and involves a higher weight of the housing.

Gas intake device having at least some features similar to those in the preamble of claim 1 is also already known from German patent applications DE 10 2004 049 027.

The present invention aims at solving such problems.

To this end, the present invention relates to a gas intake device for introducing said gases into the cylinder head of an automotive vehicle thermal engine, comprising a heat exchanger, a inlet housing of the heat exchanger and an outlet housing of the heat exchanger, characterized in that the heat exchanger is a structural element of the device, the inlet housing and the outlet housing being fixed on the heat exchanger.

As used herein, a structural element means a structure element supporting the feed gas intake device. More particularly, such an element, here a metallic element, possesses mechanical strength characteristics allowing it to support the other elements of the device - being inserted on it, either directly or indirectly - while it also provides the connection with the remainder of the engine, to which it can secure and maintain the whole device.

A heat exchanger is rigid, resistant and capable to fill such a structural function. Because of such a structure, wherein the elements defining the different volumes (inlet volume of the heat exchanger, volume of the heat exchanger and outlet volume of the heat exchanger) are separated, only the surfaces needed for the device operation are exposed to some pressure, no surface such as the portion of the housing lid located above the prior art heat exchanger being submitted to pressure stresses. Moreover, the most exposed surface of the device is the one of the heat exchanger, being more precisely the most resistant element.

Thus, the heat exchanger which only filled, in the state of the art, its heat exchanger function, fills, according to this invention, an additional function of structural element. Said heat exchanger is therefore provided with a structuring function it did not have before. The whole device is fixed around and on such a heat exchanger 14.

The resistance to vibrations is moreover better as, on the one hand, the heat exchanger 14 is no longer housed in a housing able to support such vibrations, on the other part, on the other hand, the other elements are interdependent with such a heat exchanger 14, being rigid.

The device therefore has a better resistance to pressure, vibrations and temperature.

Moreover, because the elements defining the different volumes are separated, it is possible to provide that fixing the elements on the heat exchanger occurs such that no bolt is located in the volume or in communication with the volume of the manifold 11. Thus, should a screw become unscrewed, it is not able to be drawn into the cylinders via the manifold and to damage the engine.

Preferably, the heat exchanger comprises a metal frame defining an enclosure wherein means extend for exchanging heat with gases crossing the enclosure of the heat exchanger.

Advantageously in such a case, the frame of the heat exchanger is made of aluminium and the housings are made of a plastics material.

Still preferably, as fixing the inlet housing and the outlet housing occurring through bolting, the device is arranged so that no bolt is located in the volume or in communication with the volume of the outlet housing. The device comprises a gas intake manifold in the cylinder head and the manifold forms the outlet housing of the heat exchanger. The device comprises a gas intake valve of the manifold, communicating with the manifold directly and indirectly through the heat exchanger, and the valve and the manifold being integrated as a unit module developed for being fixed on the engine cylinder head, said module being fixed on the heat exchanger. The valve is a double valve, comprising an inlet conduct, a direct outlet conduct, opening into the manifold, and an indirect outlet conduct, opening into the inlet housing of the heat exchanger.

This invention further relates to an automotive vehicle thermal engine, comprising a combustion chamber, a cylinder head forming an inlet of the combustion chamber and a device for introducing gases in the cylinder head comprising the features of the device as shown hereinabove.

This invention will be better understood referring to the following description of the preferred embodiment of the device and the engine according to the invention, referring to the accompanying drawings, wherein:
- Fig. 1 is a schematic block diagram showing the construction of the fluid circuit for gases from the motor according to this invention;
- Fig. 2 is a perspective view of an embodiment of the device of the invention;
- Fig. 3 illustrates an exploded perspective top view of the device on Fig. 2; and
- Fig. 4 illustrates an exploded perspective bottom view of the device on Fig. 2.

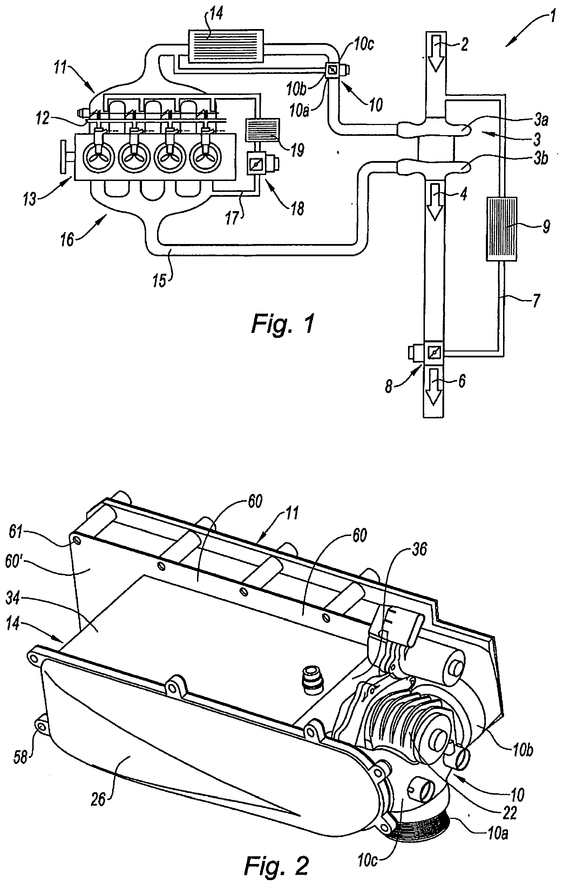

Referring to Fig. 1, the engine 1 of the invention comprises a combustion chamber 13, here made with four cylinders, wherein plungers are movably assembled, as well known. The engine feed air 2 is introduced through a turbocompressor 3, comprising a compressor 3a, driven by a turbine 3a, the latter being driven by the exhaust gases 4. Once the turbine 3b has been driven, the exhaust gases 4 are either vented through exhaust pipes 6, or "recirculated", i.e. they are reinjected into the feed air flow 2. Such a recirculation of the exhaust gases is also called "low pressure". Recirculated exhaust gases 7 are, to the this end, collected at the level of a valve 8, cooled down in a heat exchanger 9 for the low pressure exhaust gases and injected into the feed air flow 2 upstream the compressor 3a.

Such a blend of feed air with recirculated exhaust gases 7 makes it possible to decrease the nitrogen oxide emissions.

Feed gases 2, 7 therefore comprise at the compressor inlet 3a, either only air 2, or a blend of air 2 and low pressure recirculated exhaust gases 7, such a blend being regulated by the low pressure exhaust gas recirculation valve 8. Such feed gases 2, 7 are pressurized in the compressor 3a and supplied towards a feed valve 10 of a manifold 11.

The manifold 11 is adjusted on a cylinder head 12, that provides the closure of the top of the cylinders of the combustion chamber 13 and forms part of the volume of such a combustion chamber 13, as known. The manifold 11 allows for the intake of the feed gases into the cylinder head 12. It is sometimes referred to, as for the manifold 11, as feed gas dispenser into the cylinders.

The feed valve 10 of the manifold 11 is a double valve, i.e. it comprises an inlet conduct 10a and two outlet conducts 10b, 10c. The first outlet conduct 10b opens directly into the manifold 11; this will be referred to, hereinunder, as the direct outlet conduct 10b. The second outlet conduct 10c opens into a heat exchanger 14, the outlet volume of which opens into the manifold 11; said second conduct 10c therefore opens, indirectly, through said heat exchanger 14, into the manifold 11; this will be referred to, hereinunder, as the indirect outlet conduct 10c.

Thus, feed gases 2, 7 arriving into the inlet conduct 10a of the valve 10 could be, either directly introduced into the manifold 11 through the direct outlet conduct 10b, or indirectly introduced into the manifold 11, through the indirect outlet conduct 10c, creating a path through said heat exchanger 14. The double valve 10 is arranged so as to make it possible for feed gases 2, 7 to pass either entirely or in part in either one and/or the other outlet conducts 10b, 10c; it is thus possible to set the proportion of feed gases 2, 7 subjected to a thermal treatment, for example, a cooling operation, and the one that is not subjected to such a treatment.

Feed gases 2, 7 are blended with fuel and burnt off in the combustion chamber 13. When leaving the latter, exhaust gases 15, being at a high pressure, are collected in an exhaust manifold 16 and directed to the turbine 3b, as explained hereinabove.

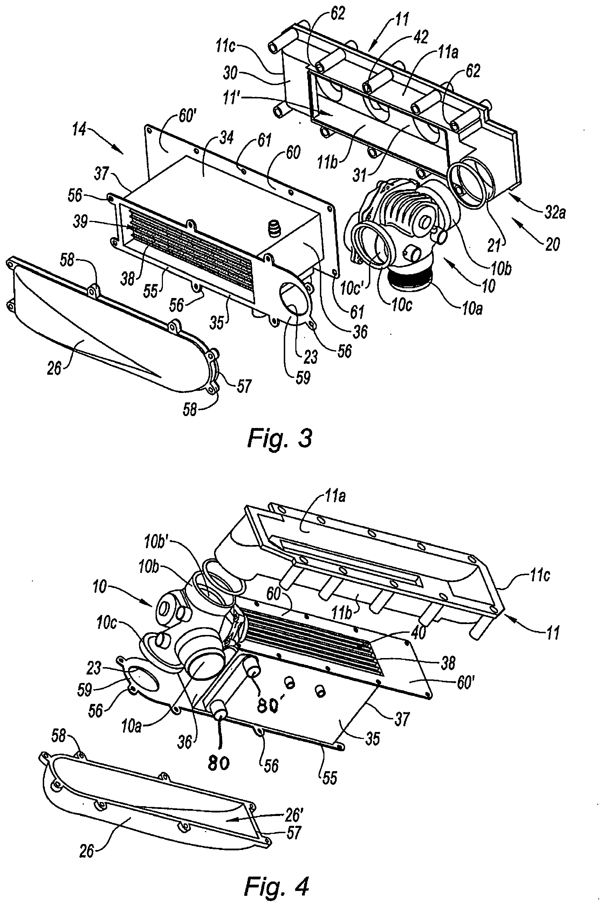

Part of such high pressure exhaust gases 17 could also be, according to a particular embodiment shown on Fig. 3, recirculated. A recirculated gas pipe 17 is, for that purpose, arranged on the exhaust manifold 16 in order to bypass part of the exhaust gas flow, the flow rate of such gases 17 being set by a valve 18. Such high pressure recirculated exhaust gases 17 are cooled down in a heat exchanger 19 and reinjected directly into the intake manifold 11. This is a so-called "high pressure" exhaust gas recirculation.

Thus, exhaust gases could be blended with the feed air 2, either upstream the compressor 3a, through the low pressure recirculation, or in the manifold 11, through the high pressure recirculation.

As show on Fig. 2 to 4, according to an embodiment of the invention, the double valve 10 and the manifold 11 are integrated as a unit module 20, intended to be fixed on the cylinder head 12 of the engine. The direct outlet conduct 10bof the double valve 10 is, for that purpose, directly fixed at the level of an inlet port 21 of the manifold 11, and therefore opens directly into the volume of the manifold 11. Such a module 20 is compact and is less responsive to vibrations. In addition, such a unit module has a universal character, enabling it to adapt itself to different engines constructions.

More specifically, the inlet conduct 10a and both outlet conducts 10b, 10c are arranged so that the incoming gases could pass, either through the direct outlet conduct 10b, or through the indirect outlet conduct 10c, or through both; in the so-described embodiment of the invention, gases cannot simultaneously pass through both conducts 10b, 10c. The valve 10 comprises to this end two butterfly flaps 10b', 10c', each in an outlet conduct 10b, 10c, respectively. The butterfly flap 10c' is clearly shown on Fig. 2. Obviously, any other flow rate regulating means could be contemplated instead of butterfly flaps 10b', 10c', as, for example, throttles or flaps.

Butterfly flaps 10b', 10c' could be each driven by a respective actuating engine. According to a preferred embodiment of the invention, a single engine 22 drives both butterfly flaps 10b', 10c'. The valve 10 could, for example, in such a case be similar to the valve as disclosed in French Patent Application no. 0603711 filed on April 26, 2006 in the name of the Applicant. Such a valve cannot allow all the possible opening combinations of conducts 10, 10c, but only the three following operating modes:
- a first mode wherein the butterfly flap 10b' is partially opened, adjustably, between its closing position and its opening position, while the butterfly flap 10c' is closed;
- a second mode wherein both butterfly flaps 10b', 10c' are closed; and
- a third mode wherein the butterfly flap 10b' is closed and the butterfly flap 10c' is opened.

Switching from one mode to the other is possible using a particular gear connecting the engine 22 with butterfly flaps 10b', 10c', as disclosed in the above-mentioned Patent Application.

With such a double valve 10:
- in the first operating mode, the feed gases 2, 7 are directly directed into the manifold 11, their flow rate being adjusted by the butterfly flap 10b' being more or less opened;
- in the second operating mode, gas feeding of the manifold 11 is closed; and
- in the third operating mode, the feed gases 2, 7 are indirectly supplied to the manifold 11 through the heat exchanger 14.

It is to be noticed that with such a double valve 10, it not possible to separate feed gases 2, 7 into two simultaneous flows, one direct and the other indirect, towards the manifold 11, according to the herein disclosed embodiment of the invention; moreover, the indirect flow cannot be adapted (the butterfly flap 10c' is either opened or closed). The double valve 10 could be, obviously, arranged so as to allow for such operating modes, either using both engines each actuating a butterfly flap, or using any other appropriate means. The advantage of such a valve 10 used herein is its compactness and its simplicity of use.

In a preferred embodiment of the invention, the heat exchanger 14 is also part of the unit module 20 intended to be secured on the cylinder head 12, the indirect outlet conduct 10c of the valve 10 being connected with a gas inlet port 23 in the inlet housing of said heat exchanger 14 and the manifold 11 forming directly the outlet volume of said heat exchanger 14. The intake device of the feed gases is even more compact and less sensitive to vibrations, as the module 20 comprises the manifold 11, the double valve 10 and said heat exchanger 14. Thus, the direct and indirect intake - via the heat exchanger 14 - of gas into the manifold 11 occurs within the same unit module 20.

According to this invention, said heat exchanger 14 forms the structural element of the gas intake device.

In the embodiment shown, the inlet housing 26 of said heat exchanger 14 and the unit module 20, comprising the manifold 11, forming here the outlet housing for said heat exchanger 14, and the double valve 10, are fixed on said heat exchanger 14. Thus, said heat exchanger 14 is integrally formed with the unit module 20 and forms the structural element thereof. But it has to be understood that the gas intake device according to the invention may not comprise the valve 10. In this case the feed gas may systematically flow through the heat exchanger. Or a by pass thereof may be provided upstream with a stand alone valve directing the feed gas either toward the heat exchanger or the by-pass.

For clarity reasons, the elements will be presented referring to front, back, high, low and right and left side positions; such positions are selected relative to the housing 24 orientation on Fig. 2, but do not prejudge the way the device is fixed on an engine. This is all the same for notions of horizontality and verticality.

Said heat exchanger 14, as it comprises a metal frame, formed by the walls 34, 35, 36, 37 thereof, is rigid, resistant and capable to fill such a structural function. Because of such a structure, wherein all the volumes are separated, only the surfaces needed for the device operation are exposed to some pressure, no surface such as the portion of the lid located above said heat exchanger 14 in the prior art embodiments is submitted to pressure stresses. Moreover, the most exposed surface of the device is the frame of said heat exchanger 14, being more precisely the most resistant element.

Moreover, because of the separation of the different volumes (inlet volume of said heat exchanger, exchange volume of said heat exchanger and outlet volume of said heat exchanger), it is possible to expect that fixing the various elements occurs so that no bolt is located in the volume or in communication with the volume of the manifold 11. Thus, should a screw become unscrewed, it is not able to be drawn into the cylinders via the manifold 11 and to damage the engine.

The heat exchanger 14 comprises a top wall 34, a bottom wall 35, a right side wall 36 and a left side wall 37. Such walls 34, 35, 36, 37 are made in metal, here in aluminium. They form a frame-forming metal sheath within which the heat exchanger 14 comprises a stack of plates 38, providing for a gas passage therebetween, between an inlet section 39 and an outlet section 40; the plates 38 are hollow and a fluid circulation, here for cooling, for example water is arranged therein. Thus, gases passing into said heat exchanger 14 exchange heat through the plates 38, arranged sufficiently thin, with water circulating in the latter. The stack of plates 38 therefore forms a heat exchanging means with feed gases 2, 7 crossing said heat exchanger 14 from the inlet section 39 to the outlet section 40. The cooling fluid feed occurs through an inlet pipe 80 and an outlet pipe 80', all the plates 38 communicating between them. This is referred to as a so-called "plate" heat exchanger.

As a summary, such a heat exchanger 14 comprises a metal frame defining an enclosure wherein means extend for exchanging heat with gases crossing the enclosure, from the inlet section 39 to the outlet section 40. Such a structure is well known to the man of the art and it is not necessary to describe it in further detail herein. It goes without saying that any other heat exchanger of an appropriate type could be used.

A feed gas inlet housing 26 in said heat exchanger 14 is fixed on said heat exchanger. Such a housing 26 defines a volume having its front section 26' opened opposite the inlet section 39 of said heat exchanger 14. The inlet housing 26 thus opens into said heat exchanger 14. Both sections 26', 39 are here identical.

Said heat exchanger 14 comprises a back flange 55 for fixing the inlet housing 26, extending in the plane and around the inlet section 39 of said heat exchanger 14. Such a flange 55 comprises a plurality of lugs 56 each pierced with a bore allowing a screw to pass, for securing the inlet housing 26, also comprising a flange 57 provided with corresponding lugs 58. The flange 55 is linked to the sheath defined by the walls 34-37.

The back flange 55 of said heat exchanger 14 extends, on the right side part, in a plane of the inlet section 39, as a flange 59 for connecting the indirect outlet conduct of the double valve 10. Such a connecting flange 59 further comprises fixing lugs 56 adapted to cooperate with corresponding lugs 58 of the inlet housing 26 to allow screw to pass, for fixing the inlet housing 26 on said heat exchanger 14.

Such a connecting flange 59 comprises a gas inlet port 23 in the inlet housing 26 of said heat exchanger 14, and allows for the continuity of the shifting volume of the feed gases 2, 7, without any leak, from the inlet pipe 10a of the valve 10 up to the inlet section 39 of said heat exchanger 14, through the indirect outlet conduct 10c, the inlet port 23 and said inlet housing 26 of said heat exchanger 14. The feed gases 2, 7 could thereby be fed from the inlet conduct 10a of the valve 10 up to said heat exchanger 14. The indirect outlet conduct 10c of the valve 10 is pressed against the connection flange 59, preferably fixed on the latter with a gasket adapted in order to avoid any leak.

The manifold 11 comprises a top wall 11a, a bottom wall 11b, a left side wall 11c and a right side portion forming a lug 32a for the connection to the direct outlet conduct 10b of the double valve 10. It therefore defines a volume having its back section 11' opened opposite the outlet section 40 of said heat exchanger 14. Said heat exchanger 14 therefore opens directly into the manifold 11. Both sections 11', 40 are here identical. The left side wall 11c of the manifold 11 forms a shoulder 30, projecting towards the left, relative to its inlet section 11', just in front of it.

Said heat exchanger 14 comprises a front flange 60 for fixing to the manifold 11, extending in the plane and around the outlet section 40 of said heat exchanger 14. Said flange 60 is pierced with a plurality of bores 61 for allowing screws to pass, allowing the manifold 11 to be fixed, comprising corresponding bores 62, on said heat exchanger 14. The front flange 60 extends, on the left side, into a side flange 60' for fixing the shoulder 30 of the manifold 11 on said heat exchanger 14. The flange 60 is linked to the sheath defined by the walls 34-37.

The outlet section 40 of said heat exchanger 14 directly opens into the manifold volume 11, forming the outlet housing thereof.

The double valve 10 is fixed at the level of the inlet port 21 of the manifold 11, through its direct outlet conduct 10b, for forming together therewith a unit module 20. Said module 20 is here directly fixed on said heat exchanger 14, as explained hereinabove. The inlet housing 26 is furthermore also fixed on the heat exchanger 14, the indirect outlet conduct 10c of the double valve 10 directly opening into the volume of said housing 26. Thus, the unit module 20 comprises here the double valve 10, the manifold 11, said heat exchanger 14 and the inlet housing thereof 26.

Thus, feed gases 2, 7, supplied at the level of the inlet conduct 10a of the double valve 10, could either pass through the direct outlet conduct 10b of the double valve 10 and directly open into the manifold 11, or pass through the indirect outlet conduct 10c and open into the inlet housing 26 of said heat exchanger 14, pass between the plates 38 of the heat exchanger 14 and, at the outlet of the latter, open into the manifold 11.

All this feed gas circulation, directly and indirectly - via said heat exchanger 14 - from the double valve 10 up to the manifold 11, occurs, according to this embodiment, in the unit module 20.

The manifold 11 opens, at the level of the front wall 31 of the manifold 11, on the cylinder head 12 of the engine.

The manifold 11 opens into the cylinders, by means of the cylinder head 12, at the level of one or several ports 42 arranged in the front wall 31 of the manifold 11. Gas flow butterfly flaps, not shown, could be provided in the manifold. Such butterfly flaps allow to modify the flow of gases leaving the manifold 11 and to induce disruptions in such a flow, in order to improve the gas blend at the inlet of the cylinder head 12. Such a mechanism is commonly called by the man of the art, using the English word "swirl".

It is to be noticed that the butterfly flaps disrupting the gas flow at the outlet of the manifold 11 are not obviously needed in the case where the high pressure exhaust gases are not recirculated; they could however be maintained if it is desired to disrupt the gas flow at such a location.

An actuator, not shown, could be provided for actuating flaps located in the manifold 11. The front wall 31 of the manifold 11 is here inserted and fixed thereon, as shown on the exploded view of Fig. 4.

The device on Figs. 2 to 4 is provided without any high pressure exhaust gas intake module, but it is possible to add such a module, providing fixing points on said heat exchanger 14 and exhaust gas input ports on the top wall 11a of the manifold 11.

The heat exchanger 14 furthermore comprises means for fixing to the engine structure, as screws, for example, through bores 61,62. Thanks to such screws, said gas intake device is secured to said cylinder head in the same time as the manifold, which is taken into sandwich between said heat exchanger and said cylinder head, is secured to the heat exchanger.

## Claims

1. A gas intake device, for introducing said gases on the cylinder head of a thermal engine of an automotive vehicle, comprising a heat exchanger (14), an inlet housing (26) of the heat exchanger (14) and an outlet housing (11) of the heat exchanger (14), the heat exchanger (14) is a structural element of the device, the inlet housing (26) and the outlet housing (11) being fixed on the heat exchanger (14), and the outlet housing (11) opening into cylinders of the thermal engine by means of said cylinder head; **characterized in that** the device comprises a manifold (11) for introducing gases into the cylinder head, wherein the manifold (11) forms the outlet housing (11) of the heat exchanger (14), and also a valve (10) for feeding gases into the manifold (11), opening into the manifold (11) directly or indirectly through the heat exchanger (14), wherein the valve (10) and the manifold (11) are integrated as a unit module (20) intended to be fixed on the engine cylinder head, said module (20) being fixed on the heat exchanger (14), and wherein the valve (10) is a double valve (10), comprising an inlet conduct (10a), a direct outlet conduct (10b), opening into the manifold (11), and an indirect outlet conduct (1 Oc), opening into the inlet housing (26) of the heat exchanger (1).

2. A device according to claim 1, wherein the heat exchanger (14) comprises a metal frame (34, 35, 36, 37) defining an enclosure wherein means (38) extend for exchanging heat with gases crossing the enclosure of the heat exchanger (14).

3. A device according to claim 2, wherein the frame of the heat exchanger (14) is made of aluminium and the housings (26, 11) are made of a plastics material.

4. A device according to any of claims 1 to 3, wherein as fixing the inlet housing (26) and the outlet housing (11) is implemented through bolting, the device is arranged so as no bolt is located in the volume or in communication with the volume of the outlet housing (11).

5. A device according to claim 1, wherein said heat exchanger (14) comprises a front fixation flange (60), provided with bores (61), and wherein said manifold comprises corresponding bores (62), continuing the front fixation flange bores (61), for allowing screws to pass to secure said device to said cylinder head.

6. A thermal engine for automotive vehicle, comprising a combustion chamber (13), a cylinder head (12) forming an inlet of the combustion chamber (13) and a device for introducing gases into the cylinder head (12), according to one of claims 1 to 5.

## Patentansprüche

1. Gasansaugvorrichtung zum Zuführen der Gase an den Zylinderkopf einer Wärmekraftmaschine eines Kraftfahrzeugs, umfassend einen Wärmetauscher (14), ein Einlassgehäuse (26) des Wärmetauschers (14) und ein Auslassgehäuse (11) des Wärmetauschers (14), wobei der Wärmetauscher (14) ein Strukturelement der Vorrichtung ist, das Einlassgehäuse (26) und das Auslassgehäuse (11) an dem Wärmetauscher (14) befestigt sind, und sich das Auslassgehäuse (11) mittels des Zylinderkopfes in Zylinder der Wärmekraftmaschine hinein öffnet; **dadurch gekennzeichnet, dass** die Vorrichtung einen Krümmer (11) zum Zuführen von Gasen in den Zylinderkopf hinein, wobei der Krümmer (11) das Auslassgehäuse (11) des Wärmetauschers (14) bildet, und außerdem ein Ventil (10) zum Einspeisen von Gasen in den Krümmer (11) hinein umfasst, das sich in den Krümmer (11) hinein direkt oder durch den Wärmetauscher (14) hindurch indirekt öffnet, wobei das Ventil (10) und der Krümmer (11) zu einer Moduleinheit (20) integriert sind, die zur Befestigung an dem Zylinderkopf der Kraftmaschine gedacht ist, wobei das Modul (20) an dem Wärmetauscher (14) befestigt ist, und wobei das Ventil (10) ein Doppelventil (10) ist, das einen Einlasskanal (10a), einen direkten Auslasskanal (10b), der sich in den Krümmer (11) hinein öffnet, und einen indirekten Auslasskanal (11c) umfasst, der sich in das Einlassgehäuse (26) des Wärmetauschers (1) hinein öffnet.

2. Vorrichtung nach Anspruch 1, wobei der Wärmetauscher (14) einen Metallrahmen (34, 35, 36, 37) umfasst, der eine Hülle definiert, in der sich Mittel (38) erstrecken, um Wärme mit Gasen auszutauschen, welche die Hülle des Wärmetauschers (14) überqueren.

3. Vorrichtung nach Anspruch 2, wobei der Rahmen des Wärmetauschers (14) aus Aluminium besteht und die Gehäuse (26, 11) aus einem Kunststoffmaterial bestehen.

4. Vorrichtung nach einem der Ansprüche 1 bis 3, wobei, wenn das Befestigen des Einlassgehäuses (26) und des Auslassgehäuses (11) durch Verschrauben implementiert ist, die Vorrichtung so angeordnet ist, dass keine Schraube in dem Volumen oder in Verbindung mit dem Volumen des Auslassgehäuses (11) angeordnet ist.

5. Vorrichtung nach Anspruch 1, wobei der Wärmetauscher (14) einen Frontbefestigungsflansch (60) umfasst, der mit Bohrungen (61) versehen ist, und wobei der Krümmer entsprechende Bohrungen (62) umfasst, welche die Bohrungen (61) des Frontbefestigungsflansches erstrecken, um zu ermöglichen, dass Schrauben hindurch gehen können, um die Vorrichtung an dem Zylinderkopf zu befestigen.

6. Wärmekraftmaschine für ein Kraftfahrzeug, umfassend einen Brennraum (13), einen Zylinderkopf (12), der einen Einlass des Brennraums (13) bildet, und eine Vorrichtung zum Zuführen von Gasen in den Zylinderkopf (12) hinein in Übereinstimmung mit einem der Ansprüche 1 bis 5.

## Revendications

1. Dispositif d'admission de gaz, pour introduire lesdits gaz sur la culasse d'un moteur thermique d'un véhicule automobile, comprenant un échangeur de chaleur (14), une boite d'entrée (26) de l'échangeur de chaleur (14) et une boîte de sortie (11) de l'échangeur de chaleur (14), l'échangeur de chaleur (14) étant un élément structurel du dispositif, la boîte d'entrée (26) et la boîte de sortie (11) étant fixées sur l'échangeur de chaleur (14), et la boîte de sortie (11) débouchant à l'intérieur de cylindres du moteur thermique au moyen de ladite culasse ; le dispositif étant **caractérisé en ce qu'**il comprend un collecteur (11) pour introduire des gaz à l'intérieur de la culasse, dans lequel le collecteur (11) forme la boîte de sortie (11) de l'échangeur de chaleur (14), et également une vanne (10) pour alimenter en gaz l'intérieur du collecteur (11), débouchant à l'intérieur du collecteur (11) directement ou indirectement par l'intermédiaire de l'échangeur de chaleur (14), dans lequel la vanne (10) et le collecteur (11) sont intégrés en tant que module unitaire (20) destiné à être fixé sur la culasse du moteur, ledit module (20) étant fixé sur l'échangeur de chaleur (14), et dans lequel la vanne (10) est une vanne double (10) comprenant un conduit d'entrée (10a), un conduit de sortie directe (10b), débouchant à l'intérieur du collecteur (11), et un conduit de sortie indirecte (10c), débouchant à l'intérieur de la boîte d'entrée (26) de l'échangeur de chaleur (1).

2. Dispositif selon la revendication 1, dans lequel l'échangeur de chaleur (14) comprend une armature métallique (34, 35, 36, 37) définissant une enceinte dans laquelle des moyens (38) s'étendent pour échanger de la chaleur avec des gaz traversant l'enceinte de l'échangeur de chaleur (14).

3. Dispositif selon la revendication 2, dans lequel l'armature de l'échangeur de chaleur (14) est fabriquée en aluminium et les boîtes (26, 11) sont fabriquées en un matériau plastique.

4. Dispositif selon l'une quelconque des revendications 1 à 3, dans lequel, alors que la fixation de la boîte d'entrée (26) et de la boîte de sortie (11) est mise en oeuvre par boulonnage, le dispositif est agencé de sorte qu'aucun boulon n'est situé dans le volume ou en communication avec le volume de la boîte de sortie (11).

5. Dispositif selon la revendication 1, dans lequel ledit échangeur de chaleur (14) comprend une bride de fixation avant (60) pourvue d'alésages (61), et dans lequel ledit collecteur comprend des alésages correspondants (62), prolongeant les alésages de la bride de fixation avant (61), pour permettre le passage des vis pour fixer ledit dispositif à ladite culasse.

6. Moteur thermique pour véhicule automobile, comprenant une chambre de combustion (13), une culasse (12) formant un orifice d'admission de la chambre de combustion (13) et un dispositif pour introduire des gaz à l'intérieur de la culasse (12) selon l'une quelconque des revendications 1 à 5.
